# EUROPEAN PATENT APPLICATION

(11) **EP 4 576 396 A1**
(43) Date of publication of application: **25.06.2025**
(21) Application number: 24220909.6
(22) Date of filing: 18.12.2024
(51) Int. Cl.: H01M 50/502, H01M 50/503, H01M 50/528, H01M 50/533, H01M 50/553

(54) **BATTERY PACK AND ELECTRIC VEHICLE**

(30) Priority: 22.12.2023 CN 202311785491; 01.04.2024 CN 202420659278 U
(71) Applicant: AESC Japan Ltd., Kanagawa, 2520012 (JP)
(72) Inventor: ZHANG, Xu, Kangqiao Town, Pudong New Area Shanghai, 201315 (CN); FU, Fangkai, Kangqiao Town, Pudong New Area Shanghai, 201315 (CN); FENG, Xiaowei, Kangqiao Town, Pudong New Area Shanghai, 201315 (CN); HE, Yafei, Kangqiao Town, Pudong New Area Shanghai, 201315 (CN)
(74) Representative: Becker, Eberhard

(57) **Abstract**

Disclosed is a battery pack, including a casing (1), one or more battery cell stacks (3, 4), and an electrode fixing component (100, 200, 300, 400, 500, 600). The battery cell stack (3, 4) is formed by stacking a plurality of pouch battery cells (7) along the thickness direction of the pouch battery cells (7). The electrode fixing component (100, 200, 300, 400, 500, 600) includes bus bars and a bus bar bracket (8) supporting the bus bars. The bus bar bracket (8) is cooperatively connected with a fixing structure on the casing (1), and the bus bars are cooperatively connected with an electrode of the battery cell stack (3, 4).

## Description

### BACKGROUND

### Technical Field

This present disclosure relates to the field of power battery technology, specifically to a battery pack and an electric vehicle integrated with the battery pack.

### Description of Related Art

The working voltage of a single secondary battery is approximately 2.5V to 4.5V. In electric vehicles or energy storage systems that require high capacity and high voltage output, it is normally required to connect multiple battery cells in series and/or parallel to form a battery module, and then connect the battery modules in series and/or parallel to form a battery pack, which is further utilized as an energy system for powering electric vehicles or as an energy storage system. The number and shape of battery modules used to build the battery pack, as well as the number and shape of battery cells used to compose the battery modules, may be flexibly varied according to actual needs.

In the field of power batteries used in electric vehicles, in order to improve the full-charge driving range and charging speed of electric vehicles, it is necessary to further enhance the energy density and cooling performance of the battery pack. As a solution to improve energy density, the CTP (cell to pack) type battery pack omits the step of forming battery modules from individual battery cells, and directly integrates the individual battery cells into a battery pack, thereby eliminating the structural components and electrical connection components required for forming battery modules, thus allowing for increased space for the battery cells themselves.

At present, common battery cells are categorized into cylindrical battery cells, prismatic battery cells, and pouch battery cells based on their structural differences. CTP (Cell-to-Pack) battery packs using prismatic battery cells have been widely developed and adopted. However, pouch battery cells, due to their disadvantages of poor resistance to external impacts and difficult assembly, still encounter a series of problems in the process of being integrated into CTP battery packs.

### SUMMARY

The disclosure solves at least one of the problems encountered by the existing technology for integrating pouch battery cells into pouch CTP battery packs.

The disclosure provides a battery pack, which includes a casing, a battery cell stack, a thermally conductive structural adhesive and an electrode fixing component. The casing includes a base plate. The battery cell stack is located in the casing and is formed by stacking multiple pouch battery cells. The battery cell stack is provided with at least one electrode lead-out portion at the end portion of the pouch battery cells in the length direction. The thermally conductive structural adhesive is directly bonded between the battery cell stack and the base plate. The electrode fixing component is located at the end portion of the battery cell stack where the at least one electrode lead-out portion is formed, and includes at least one bus bar and a bus bar bracket that supports the at least one bus bar. The bus bar bracket is connected to the casing, and the at least one electrode lead-out portion is fixed on the at least one bus bar.

In the battery pack of an optional technical solution, the casing includes a beam fixed on the base plate, and the bus bar bracket includes at least one nut member pre-embedded therein. The bus bar bracket is directly fixed on the beam or fixed on the beam through a connecting structure, and the at least one bus bar is connected with the bus bar bracket in the form of corresponding to the at least one nut member. The form in which the at least one bus bar is configured corresponding to the at least one nut member refers to the form that enables the at least one bus bar to be connected to the bus bar bracket by using the at least one nut member, and more specifically, refers to the form in which the through hole on the at least one bus bar for connection corresponds to the threaded hole of the at least one nut member.

In the battery pack of an optional technical solution, the at least one bus bar includes a plate-shaped body and an output connecting portion. The output connecting portion is formed by bending and extending the end portion of the plate-shaped body. The bus bar bracket includes a first bus bar support portion and a second bus bar support portion. The second bus bar support portion includes at least one nut member pre-embedded therein, and is directly fixed on the beam or fixed on the beam through a connecting structure. The plate-shaped body and the first bus bar support portion are fixedly connected in a face-to-face manner. The output connecting portion is fixedly connected to the second bus bar support portion in the form of overlapping the at least one nut member. The plate-shaped body and the first bus bar support portion are attached face to face, which means that one side plate surface of the plate-shaped body and the support surface of the first bus bar support portion are attached to each other.

In the battery pack of an optional technical solution, the output connecting portion is provided with a waist hole, and the waist hole has a length extending along the stacking direction of the pouch battery cells. The output connecting portion is fixedly connected to the second bus bar support portion using a bolt that passes through the waist hole and the at least one nut member in sequence.

In the battery pack of an optional technical solution, the first bus bar support portion has a baffle, the baffle is located between the battery cell stack and the at least one bus bar, and the plate-shaped body is attached to a surface of the baffle parallel to the stacking direction of the pouch battery cells.

In the battery pack of an optional technical solution, the second bus bar support portion has a buckle that cooperates with the beam or connecting structure.

In the battery pack of an optional technical solution, the top of the at least one nut member is vertically higher than the upper surface of the second bus bar support portion close to the output connecting portion, and the vertical distance difference D between the top of the at least one nut member and the upper surface of the second bus bar support portion satisfies 0.3mm≤D≤0.5mm.

In the battery pack of an optional technical solution, the thickness H of the wall at the position where the second bus bar support portion corresponds to the at least one nut member satisfies 1.2mm≤H≤1.8mm.

In the battery pack of an optional technical solution, foaming adhesive is filled between the battery cell stack and the beam, and the foaming adhesive may wrap at least part of the at least one electrode lead-out portion and at least part of the at least one bus bar.

In the battery pack of an optional technical solution, the number of the at least one bus bar is two. The first bus bar support portion is provided with a first partition that separates the plate-shaped bodies of the two of the at least one bus bar. The second bus bar support portion is provided with a second partition that separates the output connecting portions of the two of the at least one bus bar.

In the battery pack of an optional technical solution, the first bus bar support portion is provided with two through holes through which the at least one electrode lead-out portion passes through, and the two through holes are located on two sides of the first partition.

In the battery pack of an optional technical solution, the bus bar bracket is provided with a positioning block for a tooling to be clamped.

In the battery pack of an optional technical solution, a positioning hole for the insertion of the tooling is configured on the top of the bus bar bracket.

In the battery pack of an optional technical solution, one of the first bus bar support portion and the second bus bar support portion is provided with a guide bar, and the other is provided with a slot that is matched with and to be inserted by the guide bar.

In the battery pack of an optional technical solution, the first bus bar support portion is provided with a through hole for the at least one electrode lead-out portion to pass through.

In the battery pack of an optional technical solution, the first bus bar support portion and the second bus bar support portion are integrally formed.

In the battery pack of an optional technical solution, the battery cell stack is provided with two of the at least one electrode lead-out portion at one end portion in the length direction of the pouch battery cells. The positive and negative polarities of the two of the at least one electrode lead-out portion are opposite and adjacent to each other in the stacking direction of the pouch battery cells. The two of the at least one electrode lead-out portion pass through the two through holes respectively and are fixed on the two of the at least one bus bar respectively.

In the battery pack of an optional technical solution, the battery cell stack is provided with two of the at least one electrode lead-out portion at one end portion in the length direction of the pouch battery cells. The positive and negative polarities of the two of the at least one electrode lead-out portion are opposite and are placed at two end portions of the battery cell stack in the stacking direction of the pouch battery cells. The number of electrode fixing components is two, one of the at least one electrode lead-out portion is fixed on the at least one bus bar of one electrode fixing component, and the other of the at least one electrode lead-out portion is fixed on the at least one bus bar of the other electrode fixing component.

In the battery pack of an optional technical solution, the beam includes a side beam (122) and a middle beam. The side beam (122) is configured along the edge of the base plate and encloses to form a configuration space. The middle beam extends along the stacking direction of the pouch battery cells and divides the configuration space into a first configuration space and a second configuration space. The battery cell stack includes a first battery cell stack configured in the first configuration space and a second battery cell stack configured in the second configuration space. The at least one first electrode lead-out portion is configured at the end portion of the first battery cell stack close to the second battery cell stack, and the at least one second electrode lead-out portion is configured at the end portion of the second battery cell stack close to the first battery cell stack. The at least one first electrode lead-out portion and the at least one second electrode lead-out portion have opposite positive and negative polarities and are arranged corresponding to each other across the middle beam. The bus bar bracket is directly fixed on the middle beam or fixed on the middle beam through a connecting structure. The at least one bus bar includes at least one first bus bar at least partially located in the first configuration space and at least one second bus bar at least partially located in the second configuration space. The bus bar bracket supports the at least one first bus bar and the at least one second bus bar that are electrically connected to each other. The at least one first electrode lead-out portion is fixed on the at least one first bus bar, and the at least one second electrode lead-out portion is fixed on the at least one second bus bar.

In the battery pack of an optional technical solution, the at least one first bus bar includes a plate-shaped body and an output connecting portion formed by bending and extending the end portion of the plate-shaped body, and the at least one second bus bar includes a plate-shaped body and an output connecting portion formed by bending and extending the end portion of the plate-shaped body. The bus bar bracket supports an output connecting portion of the at least one first bus bar and an output connecting portion of the at least one second bus bar spaced apart from each other. The at least one bus bar further includes a transition bus bar connected between the output connecting portion of the at least one first bus bar and the output connecting portion of the at least one second bus bar. A bolt passes through the at least one transition bus bar and the output connecting portion of the at least one first bus bar, and is connectively matched with at least one nut member pre-embedded inside the bus bar bracket. Another bolt passes through the at least one transition bus bar and the output connecting portion of the at least one second bus bar, and is connectively matched with another of the at least one nut member pre-embedded inside the bus bar bracket. The at least one first electrode lead-out portion is fixed on the plate-shaped body of the at least one first bus bar and the at least one second electrode lead-out portion is fixed on the plate-shaped body of the at least one second bus bar.

In the battery pack of an optional technical solution, the at least one first bus bar includes a plate-shaped body and an output connecting portion formed by bending and extending the end portion of the plate-shaped body, and the at least one second bus bar includes a plate-shaped body and an output connecting portion formed by bending and extending the end portion of the plate-shaped body. The bus bar bracket supports the output connecting portion of the at least one first bus bar and the output connecting portion of the at least one second bus bar that are stacked on each other in the vertical direction. The bolt passes through the output connecting portion of the at least one first bus bar and the output connecting portion of the at least one second bus bar, and is connectively matched with the at least one nut member pre-embedded inside the bus bar bracket. The at least one first electrode lead-out portion is fixed on the plate-shaped body of the at least one first bus bar, and the at least one second electrode lead-out portion is fixed on the plate-shaped body of the at least one second bus bar.

In the battery pack of an optional technical solution, the beam includes a side beam and a middle beam. The side beam is configured along the edge of the base plate and encloses to form a configuration space. The middle beam extends along the stacking direction of the pouch battery cells and divides the configuration space into a first configuration space and a second configuration space. The battery cell stack includes a first battery cell stack configured in the first configuration space and a second battery cell stack configured in the second configuration space. The first positive electrode lead-out portion and the first negative electrode lead-out portion are configured at the end portion of the first battery cell stack close to the second battery cell stack, and the first positive electrode lead-out portion and the first negative electrode lead-out portion are placed at two end portions of the battery cell stack in the stacking direction of the pouch battery cells. The second positive electrode lead-out portion and the second negative electrode lead-out portion are configured at the end portion of the second battery cell stack close to the first battery cell stack, and the second positive electrode lead-out portion and the second negative electrode lead-out portion are placed at two end portions of the battery cell stack in the stacking direction of the pouch battery cells. Moreover, the position of the first positive electrode lead-out portion corresponds to the position of the second negative electrode lead-out portion, and the position of the first negative electrode lead-out portion corresponds to the position of the second positive electrode lead-out portion. A third positive electrode lead-out portion and a third negative electrode lead-out portion are configured at the end portion of the first battery cell stack away from the second battery cell stack. The third positive electrode lead-out portion and the third negative electrode lead-out portion are adjacent to each other in the stacking direction of the pouch battery cells.

The electrode fixing component includes a first electrode fixing component, a second electrode fixing component and a third electrode fixing component. The bus bar bracket of the first electrode fixing component is directly fixed on the middle beam or fixed on the middle beam through a connecting structure. The first positive electrode lead-out portion and the second negative electrode lead-out portion are respectively fixed on two of the at least one bus bar of the first electrode fixing component electrically connected to each other. The bus bar bracket of the second electrode fixing component is directly fixed on the middle beam or fixed on the middle beam through a connecting structure. The first negative electrode lead-out portion and the second positive electrode lead-out portion are respectively fixed on two of the at least one bus bar of the second electrode fixing component electrically connected to each other. The bus bar bracket of the third electrode fixing component is directly fixed on the side beam or fixed on the side beam through a connecting structure, and the third positive electrode lead-out portion and the third negative electrode lead-out portion are respectively fixed on two of the at least one separate bus bar of the third electrode fixing component.

In the battery pack of an optional technical solution, the beam includes a side beam and a middle beam. The side beam is configured along the edge of the base plate and encloses to form a configuration space. The middle beam extends along the stacking direction of the pouch battery cells and divides the configuration space into a first configuration space and a second configuration space. The battery cell stack includes a first battery cell stack configured in the first configuration space and a second battery cell stack configured in the second configuration space. The first positive electrode lead-out portion and the first negative electrode lead-out portion are configured at the end portion of the first battery cell stack away from the second battery cell stack, and the first positive electrode lead-out portion and the first negative electrode lead-out portion are placed at two end portions of the battery cell stack in the stacking direction of the pouch battery cells. The second positive electrode lead-out portion and the second negative electrode lead-out portion are configured at the end portion of the second battery cell stack near the first battery cell stack, and the second positive electrode lead-out portion and the second negative electrode lead-out portion are placed at two end portions of the battery cell stack in the stacking direction of the pouch battery cells. The third positive electrode lead-out portion and the third negative electrode lead-out portion are configured at the end portion of the first battery cell stack near the second battery cell stack, and the third positive electrode lead-out portion and the third negative electrode lead-out portion are adjacent to each other in the stacking direction of the pouch battery cells.

The electrode fixing component includes a first electrode fixing component, a second electrode fixing component, a third electrode fixing component, a fourth electrode fixing component and a fifth electrode fixing component. The bus bar bracket of the first electrode fixing component is directly fixed on the side beam or fixed on the side beam through the connecting structure, and the first positive electrode lead-out portion is fixed on the at least one bus bar of the first electrode fixing component. The bus bar bracket of the second electrode fixing component is directly fixed on the side beam or fixed on the side beam through the connecting structure, and the first negative electrode lead-out portion is fixed on the at least one bus bar of the second electrode fixing component. The bus bar bracket of the third electrode fixing component is directly fixed on the middle beam or fixed on the middle beam through the connecting structure, and the second positive electrode lead-out portion is fixed on the at least one bus bar of the third electrode fixing component. The bus bar bracket of the fourth electrode fixing component is directly fixed on the middle beam or fixed on the middle beam through the connecting structure, and the second negative electrode lead-out portion is fixed on the at least one bus bar of the fourth electrode fixing component. The bus bar bracket of the fifth electrode fixing component is directly fixed on the middle beam or fixed on the middle beam through the connecting structure. The third positive electrode lead-out portion and the third negative electrode lead-out portion are respectively fixed on two of the at least one separate bus bar of the fifth electrode fixing component.

In the battery pack of an optional technical solution, an elastic member is configured between the second bus bar support portion and the beam.

The disclosure further provides an electric vehicle, which is integrated with the battery pack described in any of the above optional technical solutions.

### [Advantageous Effect]

By setting the electrode fixing component, the electrode of the battery cell stack may be fixed without using the end plate component, thereby directly loading the battery cell stack into the casing to fully utilize the space within the casing and improve volume utilization and energy density.

### BRIEF DESCRIPTION OF THE DRAWINGS

FIG. 1 is a schematic view of the stack distribution of the pouch CTP battery pack provided in some embodiments of the present disclosure.
FIG. 2 is a schematic view of the stack distribution of the pouch CTP battery pack provided in some embodiments of the present disclosure.
FIG. 3 is an exploded view of a pouch CTP battery pack using the stack distribution method corresponding to FIG. 1.
FIG. 4 is a partial schematic view of the battery cell stack before casing is configured in some embodiments of the present disclosure.
FIG. 5 is a schematic view of the connection between the support base and the casing in some embodiments of the present disclosure.
FIG. 6 is a partial enlarged view of position C in FIG. 5.
FIG. 7 is a schematic view of the connection between the second bus bar support portion and the support base in some embodiments of the present disclosure.
FIG. 8 is a schematic view of the connection between the first bus bar support portion and the at least one bus bar in some embodiments of the present disclosure.
FIG. 9 is a partial schematic view of the battery cell stack after the casing is configured in some embodiments of the present disclosure.
FIG. 10 is a perspective view of the at least one bus bar, the second bus bar support portion, and the support base connected together in some embodiments of the present disclosure.
FIG. 11 is a top view of the structure shown in FIG. 10.
FIG. 12 is a cross-sectional view along line B-B of the structure shown in FIG. 11.
FIG. 13 is an isometric view of the electrode fixing component in some embodiments of the present disclosure.
FIG. 14 is a front view of the structure shown in FIG. 13.
FIG. 15 is a cross-sectional view of the XY plane of the structure shown in FIG. 14.
FIG. 16 is a partial enlarged view of the battery cell stack.
FIG. 17 is a schematic view of the electrical connection structure between two sets of battery cell stacks in some embodiments of the present disclosure.
FIG. 18 is a cross-sectional view along line B-B of the structure shown in FIG. 17.
FIG. 19 is an exploded view of a pouch CTP battery pack using the stack distribution method corresponding to FIG. 1.
FIG. 20 is a partial enlarged view of FIG. 19.
FIG. 21 is a schematic view of the electrical connection structure between two sets of battery cell stacks in some embodiments of the present disclosure.
FIG. 22 is an exploded view of a pouch CTP battery pack using the stack distribution method corresponding to FIG. 2.
FIG. 23 is a schematic structural view of the electrode fixing component in some embodiments of the present disclosure.
FIG. 24 and FIG. 25 are exploded views of the structure shown in FIG. 23.
FIG. 26 is a schematic structural view of the electrode fixing component in some embodiments of the present disclosure.

### DESCRIPTION OF THE EMBODIMENTS

It should be noted that the working principle, features, advantages, etc. of the battery pack according to the present application will be described below by way of examples. However, it should be understood that all descriptions are given for the purpose of illustration only, and therefore should not be construed as any restrictions on the disclosure.

In addition, for any single technical feature described or implicit in the embodiments mentioned herein, or any single technical feature shown or implicit in the drawings, the disclosure still allows any combination or deletion between these technical features (or their equivalents) without any technical obstacles, through which more other embodiments of the present disclosure that might not be directly mentioned in the description may be obtained.

### [Terminology]

The X-axis direction in the description refers to the length direction of the pouch battery cells, the Y-axis direction refers to the stacking direction of the pouch battery cells, and the Z-axis direction refers to the direction perpendicular to the plane determined by the X-axis and the Y-axis.

In the description, "upper" refers to the direction away from the base plate of the lower housing in the Z-axis direction, and "lower" refers to the direction closer to the base plate of the lower housing in the Z-axis direction.

### [Summary]

Referring generally to the figures, according to exemplary embodiments, a pouch CTP (Cell to Pack) battery pack, a battery cell stack, and components for fixing the output electrode of the battery cell stack, etc. are illustrated. By setting the electrode fixing component, the electrode of the battery cell stack may be fixed without using the end plate component, so that the battery cell stack may be directly loaded into the casing to fully utilize the space within the casing and improve volume utilization.

### [Distribution of Battery Cell Stack]

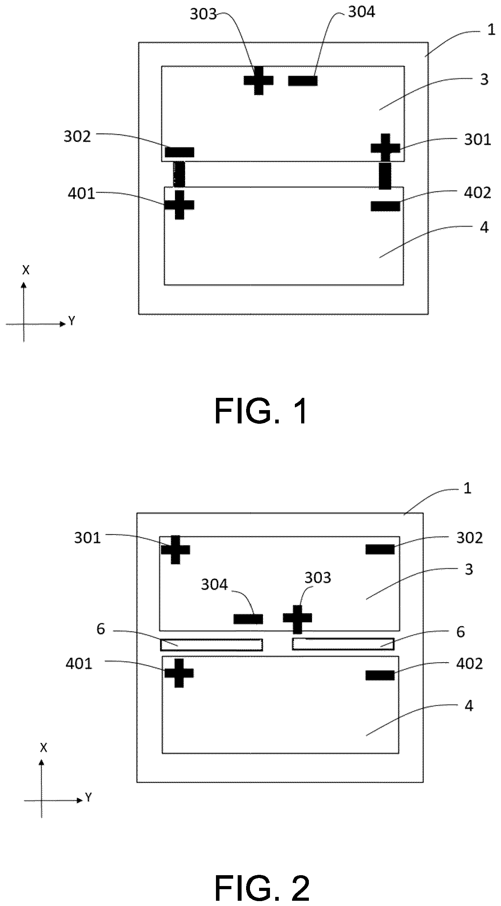

FIG. 1 is a schematic view of the stack distribution of the pouch CTP battery pack provided in some embodiments of the present disclosure.

Referring to FIG. 1, in some embodiments of the present disclosure, a pouch CTP battery pack includes a square casing 1 and a square battery cell stack. The internal space of the casing 1 may accommodate two sets of battery cell stacks (3, 4) placed side by side.

The two sets of battery cell stacks (3, 4) are the first battery cell stack 3 and the second battery cell stack 4. The first output positive electrode 301 and the first output negative electrode 302 are configured respectively at two ends of one side of the first battery cell stack 3 adjacent to the second battery cell stack 4. Correspondingly, the second output positive electrode 401 and the second output negative electrode 402 are respectively configured at two ends of one side of the second battery cell stack 4 adjacent to the first battery cell stack 3. The position of the first output positive electrode 301 corresponds to the position of the second output negative electrode 402, and the position of the first output negative electrode 302 corresponds to the position of the second output positive electrode 401, thereby reducing the wiring length and facilitating the series electrical connection between the two sets of battery cell stacks (3, 4).

In addition, the third output positive electrode 303 and the third output negative electrode 304 adjacent to each other are further configured at one end of the first battery cell stack 3 away from the second battery cell stack 4. The first output positive electrode 301, the first output negative electrode 302, the second output positive electrode 401 and the second output negative electrode 402 are configured as electrodes electrically connected in series within the two sets of battery cell stacks (3, 4). The third output positive electrode 303 and the third output negative electrode 304 are configured as the output electrodes of the entire pouch CTP battery pack. In some embodiments, the third output positive electrode 303 and the third output negative electrode 304 are electrically connected to a battery pack disconnect unit (BDU), and then supply power to the entire vehicle through the battery pack disconnect unit.

The output electrodes provided through the above distribution and electrical connection method, that is, the third output positive electrode 303 and the third output negative electrode 304, are adjacent to each other. In some cases, when it is required to make the output electrodes of the entire pouch CTP battery pack to be far away from each other, the first battery cell stack 3 may be placed in the casing 1 by rotation of 180° relative to FIG. 1, thereby obtaining the assembly structure shown in FIG. 2.

Referring to FIG. 2, the third output positive electrode 303 and the third output negative electrode 304 are rotated to a position adjacent to the second battery cell stack 4. The third output positive electrode 303 and the second output negative electrode 402 are electrically connected through the adapter bus bar 6. The third output negative electrode 304 and the second output positive electrode 401 are electrically connected through another adapter bus bar 6, thereby realizing a high-voltage electrical connection between the first battery cell stack 3 and the second battery cell stack 4. The first output positive electrode 301 and the first output negative electrode 302 may be used as the output electrodes of the entire pouch CTP battery pack. By using the first battery cell stack 3 with the above-mentioned electrode distribution and the adapter bus bar 6, the configuration angle of the first battery cell stack 3 may be flexibly adjusted to meet the requirement of different output electrode positions.

The above examples illustrate the distribution method and electrical connection method of the first battery cell stack 3 and the second battery cell stack 4 in some embodiments of the present disclosure. It can be understood that the above description is only exemplary and should not be constructed as a limitation on the distribution method and the electrical connection method. In other embodiments of the present disclosure, the first battery cell stack 3 and the second battery cell stack 4 may also be integrated into a single-row battery cell stack, and the configuration positions of each output electrode of the battery cell stack may also be flexibly adjusted according to actual needs.

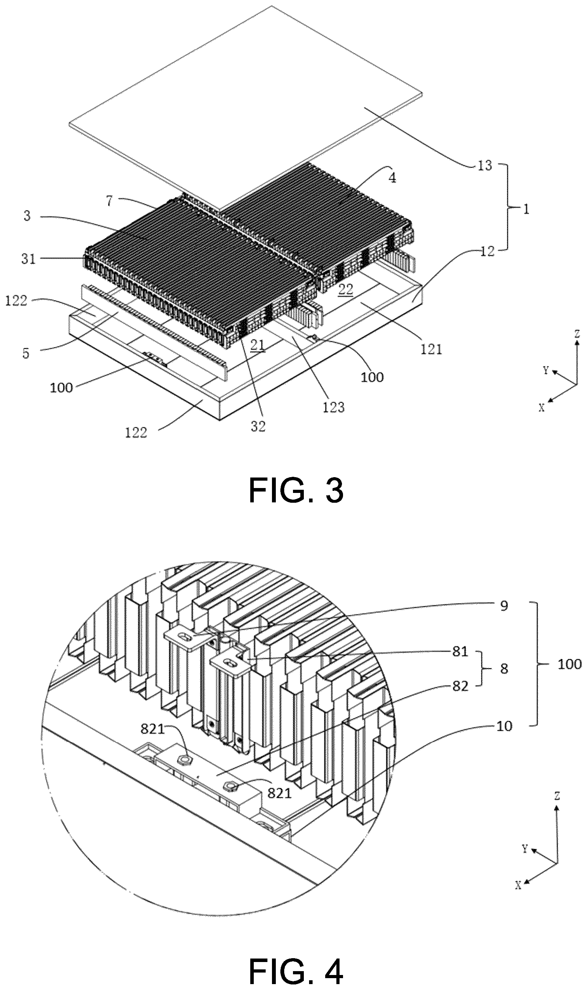

FIG. 3 is an exploded view of a pouch CTP battery pack using the stack distribution method corresponding to FIG. 1.

Referring to FIG. 3, the square casing 1 includes a lower housing 12 and an upper cover 13. The lower housing 12 includes a rectangular lower housing base plate 121 and four side beams 122. The four side beams 122 are respectively fixed on the four sides of the rectangular lower housing base plate 121. The four side beams 122, the lower housing base plate 121 and the upper cover 13 together form a chamber for accommodating the battery cell stack. In addition to the four side beams 122, the casing 1 further includes a casing middle beam 123 configured in the center of the length direction of the casing 1. The casing middle beam 123 divides the chamber into a first chamber 21 and a second chamber 22. The first chamber 21 is configured to accommodate the first battery cell stack 3, and the second chamber 22 is configured to accommodate the second battery cell stack 4.

The bottom of the battery cell stack and the lower housing base plate 121 are directly bonded and fixed through the thermally conductive structural adhesive. In order to stabilize the battery cell stack and enhance the overall strength of the battery pack, the foaming adhesive 5 is filled between the battery cell stack and the side beam 122 or the casing middle beam 123. A structural adhesive or an elastic component (not shown) is configured on the top of the battery cell stack to fill the gap between the battery cell stack and the upper cover 13. By using the thermally conductive structural adhesive and the foaming adhesive 5 between the bottom of the battery cell stack and the lower housing base plate 121, as well as the structural adhesive or elastic component configured on the top of the battery cell stack, it is possible to provide a stable and cushion support for the battery cell stack from all directions. In some embodiments, the elastic component may be made of fireproof materials such as foam and mica, and double-sided adhesive or hot melt adhesive is configured between the elastic component and the battery cell stack.

The four side beams 122 include two long side beams extending along the X-axis direction and two short side beams extending along the Y-axis direction. An electrode fixing component is configured on the inner side of the middle of the short side beam adjacent to the first battery cell stack 3, and the third output positive electrode 303 and the third output negative electrode 304 are both fixedly connected to the electrode fixing component.

An electrode fixing component is configured on the casing middle beam 123. The bus bar connected to the first output positive electrode 301 and the bus bar connected to the second output negative electrode 402 are electrically connected, and both of them are fixed on one of the electrode fixing components. The bus bar connected to the first output negative electrode 302 and the bus bar connected to the second output positive electrode 401 are electrically connected, and both of them are fixed on the other electrode fixing component. In this way, the electrical connection between the first battery cell stack 3 and the second battery cell stack 4 is achieved through the two electrode fixing components.

There are many specific implementations of the electrode fixing component, and these implementations will be described in detail later.

### [Structure of Battery Cell Stack]

Continuing to refer to FIG. 3, in this embodiment, the battery cell stack is formed by stacking multiple pouch battery cells 7. The stacking direction is the Y-axis direction, which is the thickness direction of the pouch battery cells 7 and the width direction of the casing 1. The length direction of the pouch battery cells 7 is the X-axis direction, which is also the length direction of the casing 1. The top and bottom of each pouch battery cells 7 are insulated and protected by full insulating tape (not shown in the figure).

### [Electrode Fixing Component 100]

### First Embodiment

The electrode fixing component 100 in this embodiment may be configured to fix the third output positive electrode 303 and the third output negative electrode 304 as shown in FIG. 1.

FIG. 4 is a partial schematic view of the battery cell stack before the casing is configured. Referring to FIG. 4, the electrode fixing component 100 includes: a bus bar bracket 8, bus bars 9 and a support base 10. The bus bar bracket 8 includes a first bus bar support portion 81 and a second bus bar support portion 82. The second bus bar support portion 82 includes a pre-embedded nut 821 built therein.

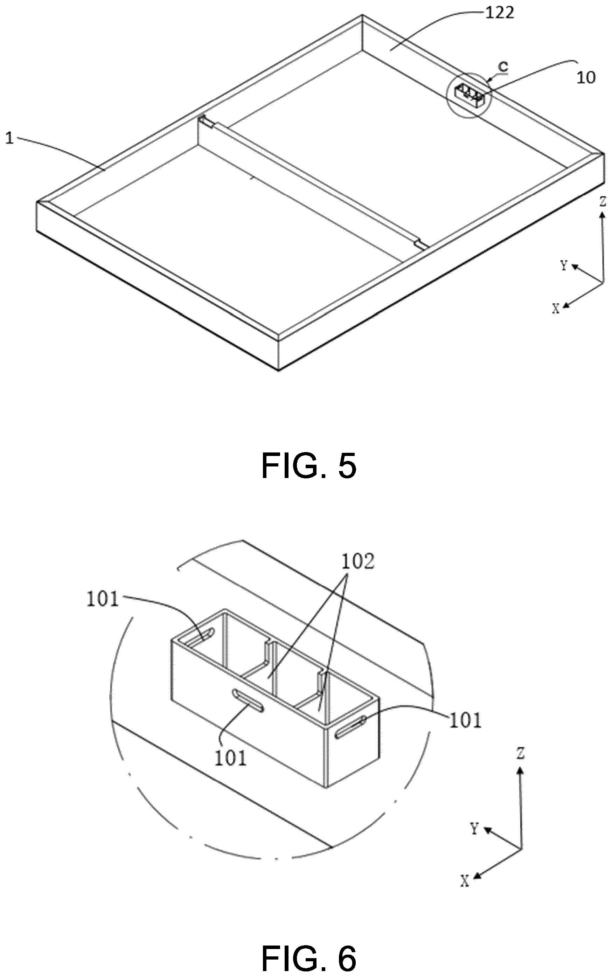

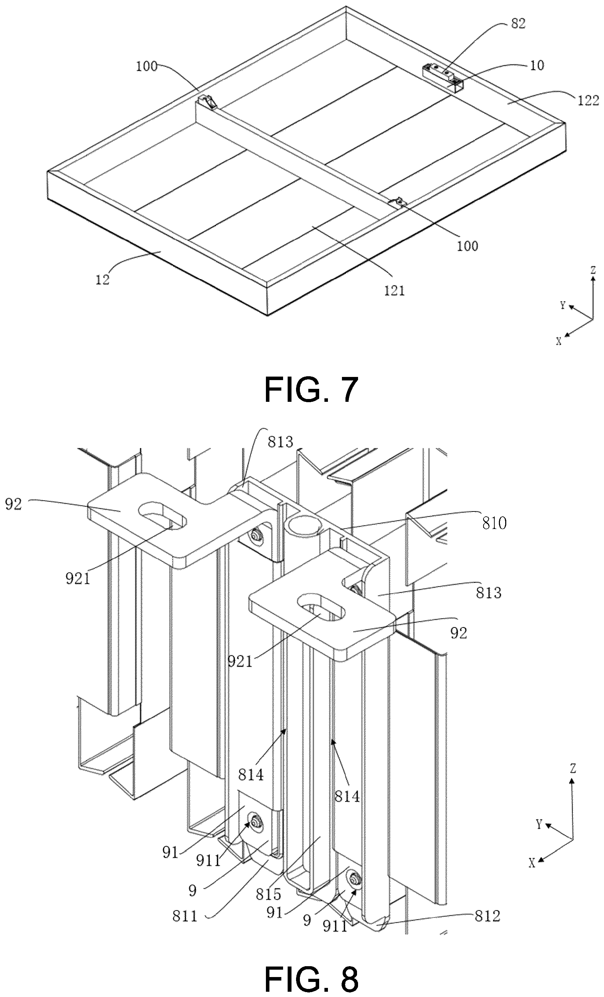

FIG. 5 is a schematic view of the connection between the support base 10 and the casing 1, and FIG. 6 is a partial enlarged view of position C in FIG. 5. Referring to FIG. 5 and FIG. 6, the support base 10 is in a rectangular shape and is configured on the inner wall of the side beam 122 of the casing 1. An engaging hole 101 is configured on the outer peripheral wall, and two plate portions 102 extending on the plane determined by the X-axis and the Z-axis are spaced apart therein. As shown in FIG. 7, the support base 10 and the second bus bar support portion 82 may be connected together by engaging or other means. The support seat 10 is a metal structure, which may be integrally formed on the side beam 122 or fixedly welded on the side beam 122.

FIG. 8 is a partial enlarged view of FIG. 5, showing a state in which the first bus bar support portion 81 and the bus bars 9 are connected together.

The first bus bar support portion 81 includes a baffle 810, which includes back plates 811 and 812 extending in the Z-axis direction and a side plate 813 formed by bending two sides of the back plates 811 and 812. The back plate is composed of a first back plate 811 and a second back plate 812 whose upper edges are connected together and arranged side by side, so that the back plate as a whole has a comb shape. The two bus bars 9 may be connected to the first back plate 811 and the second back plate 812 respectively.

The bus bars 9 include a main body portion 91 extending in the Z-axis direction, and a folded portion 92 formed by the upper end of the main body portion 91 being folded forward. An opening 921 is configured on the folded portion 92.

The main body portion 91 is provided with a fixing hole 911, and the bus bars 9 are fixedly connected with the first bus bar support portion 81 by using the fixing hole 911.

The opening 921 on the folded portion 92 may be a round hole or a waist hole. Preferably, the opening 921 is a waist hole extending along the Y-axis direction. When the opening 921 is a waist hole, even if the battery cell stack moves in the Y-axis direction, the bus bars 9 may be locked tight by connecting bolts through the waist hole to absorb manufacturing tolerances.

The first back plate 811 and the second back plate 812 of the first bus bar support portion 81 both have through holes 814 for the battery cell tabs (not shown) of the third output positive electrode 303 and the third output negative electrode 304 to pass through. The length of the through hole 814 extending in the Z-axis direction is greater than the width of the battery cell tab in the Z-axis direction to ensure that the battery cell tab can pass through the through hole along the X-axis direction and be rolled and folded in the Y-axis direction, so as to be attached to the bus bars 9 for welded connection.

A rib 815 is configured between the through holes 814 on the first back plate 811 and the second back plate 812 to prevent overlapping short circuit between the battery cell tabs of the third output positive electrode 303 and the third output negative electrode 304. Preferably, the height of the rib 815 in the Z-axis direction is 2 mm to 4 mm to better avoid the occurrence of short circuit and improve the reliability of the battery.

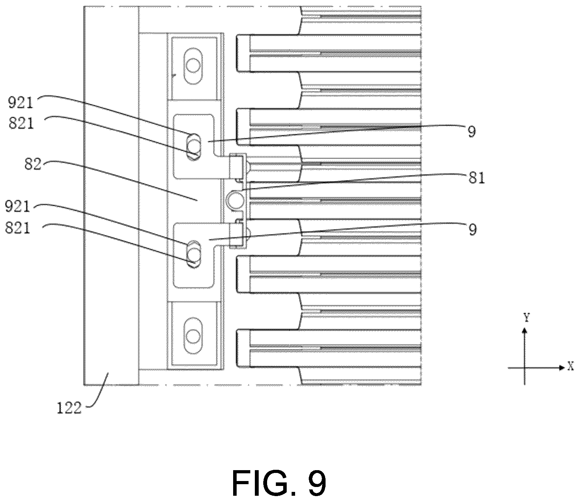

FIG. 9 is a partial schematic view of the battery cell stack after the casing 1 is configured. As shown in FIG. 9, the bus bars 9 are overlapping and fixed on the second bus bar support portion 82 in the form of the opening 921 of the bus bars 9 overlapping the nut 821.

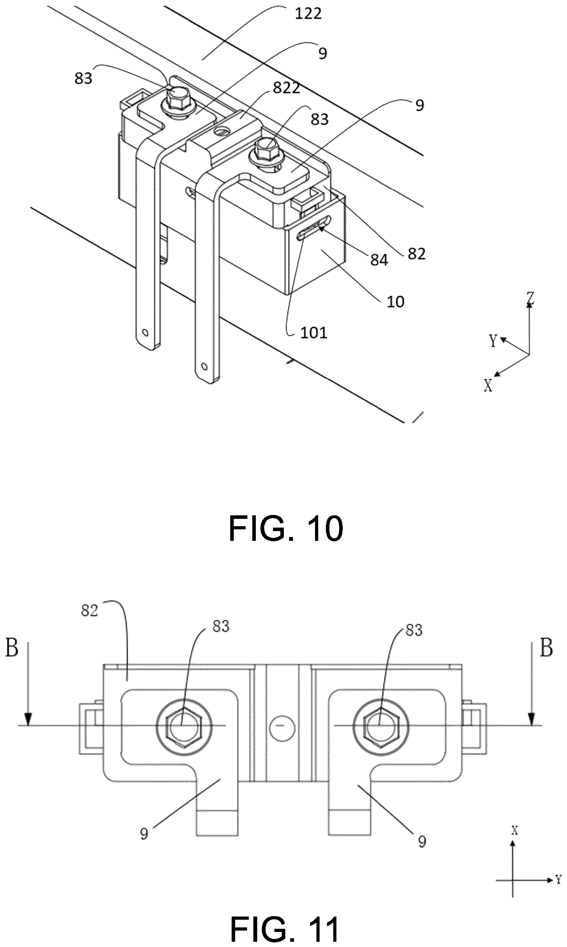

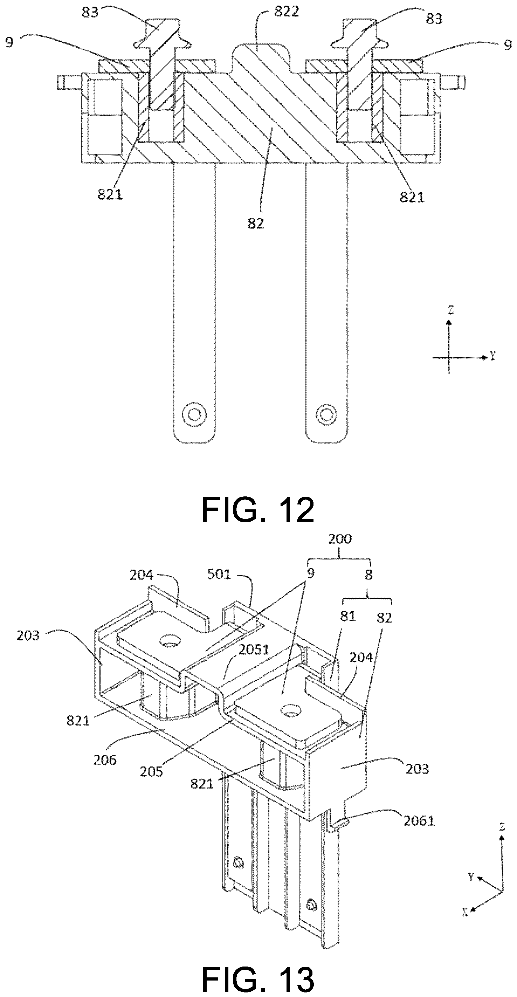

FIG. 10 is a perspective view of the bus bars 9, the second bus bar support portion 82, and the support base 10 connected together. FIG. 11 is a top view of the structure shown in FIG. 10. FIG. 12 is a cross-sectional view along line B-B of the structure shown in FIG. 11. Referring to FIG. 10 to FIG. 12, the support base 10 is fixed on the inner surface of the side beam 122 of the casing 1. An engaging hole 101 is configured on the peripheral wall of the support base 10, and a buckle 84 that matches the engaging hole 101 is configured on the second bus bar support portion 82. Through the cooperation of the buckle 84 and the engaging hole 101, and the support provided by the plate portion 102 for the second bus bar support portion 82, the second bus bar support portion 82 is able to be fixedly connected to the upper end of the support base 10. The two bus bars 9 overlap the upper surface of the second bus bar support portion 82 and contact the nut 821. The bolt 83 passes through the opening 921 of the bus bars 9 and is fastened with the nut 821. The middle portion of the second bus bar support portion 82 has a partition 822 in the form of a protrusion extending upward, and the partition 822 separates the two bus bars 9.

Preferably, the nut 821 is 0.3 mm to 0.5 mm higher than the upper surface of the second bus bar support portion 82 in the Z-axis direction, that is, the vertical distance difference between the upper end surface of the nut 821 and the upper surface of the second bus bar support portion 82 is 0.3 mm to 0.5mm to ensure that bus bars 9 can be overlapped with the nut 821 first.

Preferably, the thickness of the plastic wall at the position where the second bus bar support portion 82 corresponds to the nut 821 is 1.2 mm to 1.8 mm.

In this embodiment, the second bus bar support portion 82 is first fixed on the support base 10, and the battery cell tabs of the third output positive electrode 303 and the third output negative electrode 304 are connected to the bus bars 9 fixed on the first bus bar support portion 81. Then, the battery cell stack and the bus bars 9 fixed on the first bus bar support portion 81 are integrally configured into the casing 1 so that the bus bars 9 and the second bus bar support portion 82 overlap each other and are fixed together.

Although the electrode fixing component 100 in this embodiment is exemplified above for fixing the third output positive electrode 303 and the third output negative electrode 304 as shown in FIG. 1, the present disclosure is not limited thereto, as long as the output electrode can be fixed using the electrode fixing component 100 as described above, and there is no specific limitation to the specific position of the output electrode in the casing 1. For example, in some embodiments, the electrode fixing component 100 provided in this embodiment may be used to fix the third output positive electrode 303 and the third output negative electrode 304 as shown in FIG. 2, as long as the support base 10 is moved from the position of the beam 122 to the position of the casing middle beam 123. In another example, in some embodiments, the electrode fixing component 100 provided in this embodiment may be used to fix the third output positive electrode 303 and the third output negative electrode 304 as shown in FIG. 2, taking into account that the output electrode is located in the middle of the casing 1, it is possible to omit the use of the support base 10 as mentioned above, or to integrate the support base 10 on the casing middle beam 123 to become a part of the casing middle beam 123.

### Second Embodiment

The electrode fixing component 200 in this embodiment may be used to fix the third output positive electrode 303 and the third output negative electrode 304 as shown in FIG. 2.

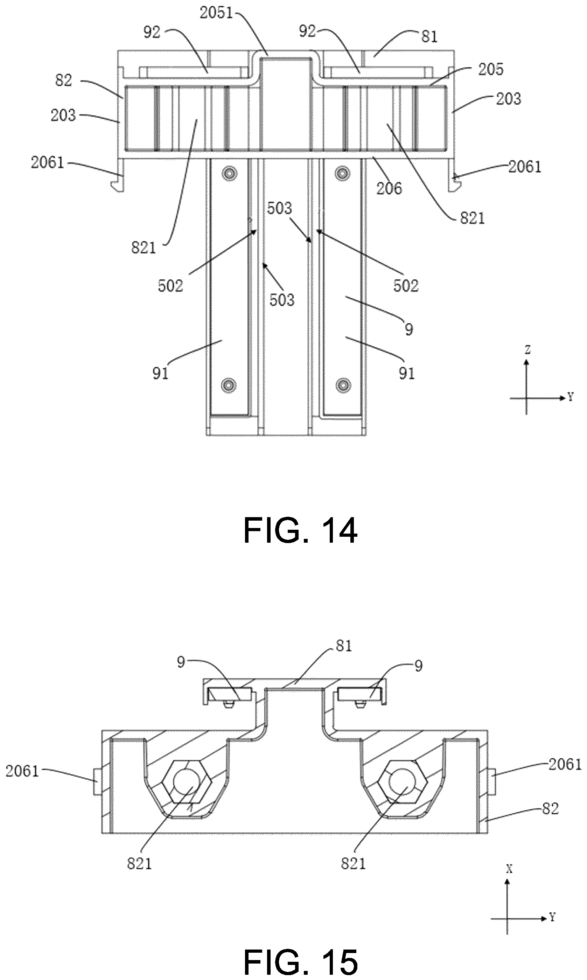

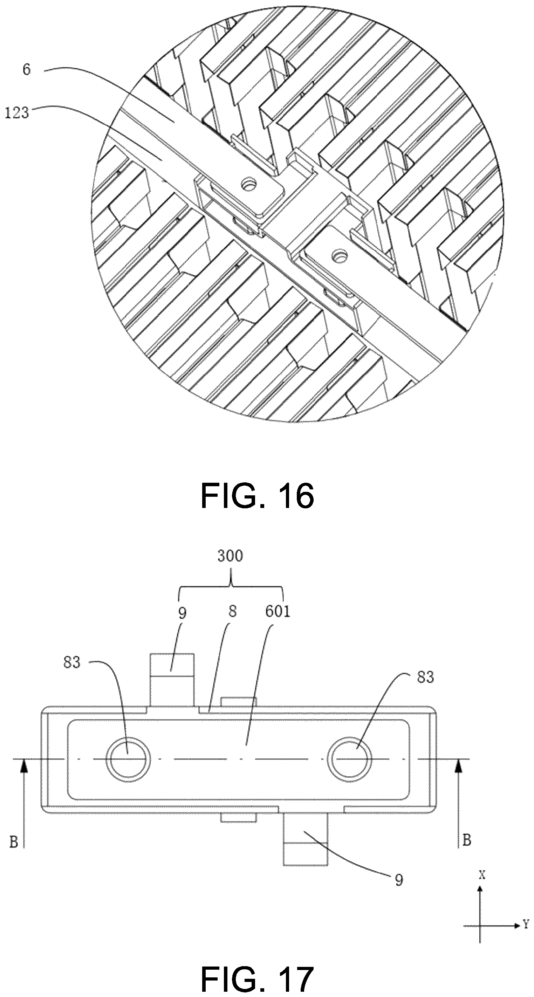

FIG. 13 is an isometric view of the electrode fixing component 200 in the embodiment. FIG. 14 is a front view of the structure shown in FIG. 13. FIG. 15 is a Z-direction cross-sectional view of the structure shown in FIG. 14. FIG. 16 is a partial enlarged view of the battery cell stack.

Referring to FIG. 13 to FIG. 16, the electrode fixing component 200 includes: a bus bar bracket 8 and bus bars 9. The bus bar bracket 8 includes a first bus bar support portion 81 and a second bus bar support portion 82. The second bus bar support portion 82 includes a pre-embedded nut 821 built therein. The first bus bar support portion 81 and the second bus bar support portion 82 are integrated into an integrated component and injection molded, and the bus bars 9 are embedded and fixed on the bus bar bracket 8.

The second bus bar support portion 82 includes: two side plates 203 oppositely arranged in the Y-axis direction; two back plates 204 that are spaced apart and formed by folding the rear ends of the two side plates 203 inwardly in an opposite manner; and an upper plate 205 and a lower plate 206 arranged oppositely in the Z-axis direction. The nut 821 is configured in the space between the upper plate 205 and the lower plate 206. The nut 821 and the second bus bar support portion 82 are integrated into an integrated component and injection molded. The middle portion of the upper plate 205 is connected to the back plate 501 of the first bus bar support portion 81. By integrating the first bus bar support portion 81 and the second bus bar support portion 82 into integrated components and having them injection molded, it is possible to ensure precise alignment between the bus bars 9 and the nut 821. Moreover, before configuring the battery cell stack into the casing 1, the bus bars 9 and the nut 821 may be locked tight by bolts or other methods to avoid misalignment of the output electrode gaps during the assembly process.

In this embodiment, the structures of the first bus bar support portion 81 and the bus bars 9 are similar to those described in the First Embodiment above. Referring to FIG. 14 and FIG. 15, the back plate 501 of the first bus bar support portion 81 is provided with two through holes 502 for the battery cell tabs of the third output positive electrode 303 and the third output negative electrode 304 to pass through. The length of the through hole 502 extending in the Z-axis direction is greater than the sum of the widths of the battery cell tabs of the third output positive electrode 303 and the third output negative electrode 304 in the Z-axis direction to ensure that the battery cell tabs are able to pass through the through hole 502. In addition, a rib 503 is configured between the two through holes 502 to prevent overlapping short circuit between the battery cell tabs of the third output positive electrode 303 and the third output negative electrode 304. Preferably, the height of the rib 503 on the Z-axis is 2 mm to 4 mm to better avoid the occurrence of short circuit and improve the reliability of the battery.

Referring to FIG. 13, the bus bars 9 are fixed on the first bus bar support portion 81 through hot riveting or buckling, and the folded portions 92 of the two bus bars 9 are respectively overlapped with the upper surface of the upper plate 205 of the second bus bar support portion 82. A partition 2051 in the form of a protrusion is formed in the middle of the upper plate 205 to separate the two bus bars 9.

A buckle 2061 is configured at the lower ends of the two side plates 203 of the second bus bar support portion 82. A connecting structure that matches the buckle 2061 is configured on the casing 1. The electrode fixing component 200 uses the buckle 2061 to be fixedly connected with the casing middle beam 123.

Preferably, the nut 821 is 0.3 mm to 0.5 mm higher than the upper surface of the upper plate 205 of the second bus bar support portion 82 in the Z-axis direction, that is, the vertical distance difference between the upper end surface of the nut 821 and the upper surface of the upper plate 205 is 0.3 mm to 0.5 mm, so as to ensure that the bus bars 9 may be overlapped with the nut 821 first.

Preferably, the thickness of the plastic wall at a position where the second bus bar support portion 82 corresponds to the nut 821 is 1.2 mm to 1.8 mm.

Preferably, the bus bar bracket 8 is a bus bar plastic bracket, the heat deformation temperature of the bus bar plastic bracket is ≥100°C, and the flame retardancy meets the UL94 V0 grade. The bus bar plastic bracket may be made of materials such as polyamide resin (PA66) or polybutylene terephthalate (PBT).

Preferably, a foaming adhesive 5 is configured between the battery cell tab and the casing 1 of the battery cell stack, and the foaming adhesive 5 may wrap at least part of the battery cell tab and the bus bars 9.

In the present embodiment, the electrode fixing component 200 is connected to the output electrode of the battery cell stack, and the bus bars 9 and the nut 821 are locked tight by means of bolts or the like. Then the electrode fixing component 200 and the battery cell stack are configured as a whole to the casing 1, and are fixedly connected to the casing 1. By locking the bus bars 9 and the nut 821 by means of bolts or the like before the battery cell stack is configured into the casing 1, it is possible to avoid misalignment of the output electrode gaps during the assembly process. In other words, by integrating the first bus bar support portion 81 and the second bus bar support portion 82 into an integrated component and having them injection molded, it is helpful to accurately position the bus bars 9 and the second bus bar support portion 82, so that the bus bars 9 and the adapter bus bar 6 may be accurately fixed.

Although the electrode fixing component 200 in this embodiment is exemplified above for fixing the third output positive electrode 303 and the third output negative electrode 304 as shown in FIG. 2, the present disclosure is not limited thereto, as long as the output electrode can be fixed using the electrode fixing component 200 as described above, and there is no specific limitation to the specific position of the output electrode in the casing 1. For example, in some embodiments, the electrode fixing component 200 provided in this embodiment may be used to fix the third output positive electrode 303 and the third output negative electrode 304 as shown in FIG. 1, as long as a fixing structure that matches the electrode fixing component 200 is configured on the side beam 122 of the casing 1.

### Third Embodiment

The electrode fixing component 300 in this embodiment may be used to fix the first output positive electrode 301 and the second output negative electrode 402 as shown in FIG. 1, or to fix the first output negative electrode 302 and the second output positive electrode 401 as shown in FIG. 1.

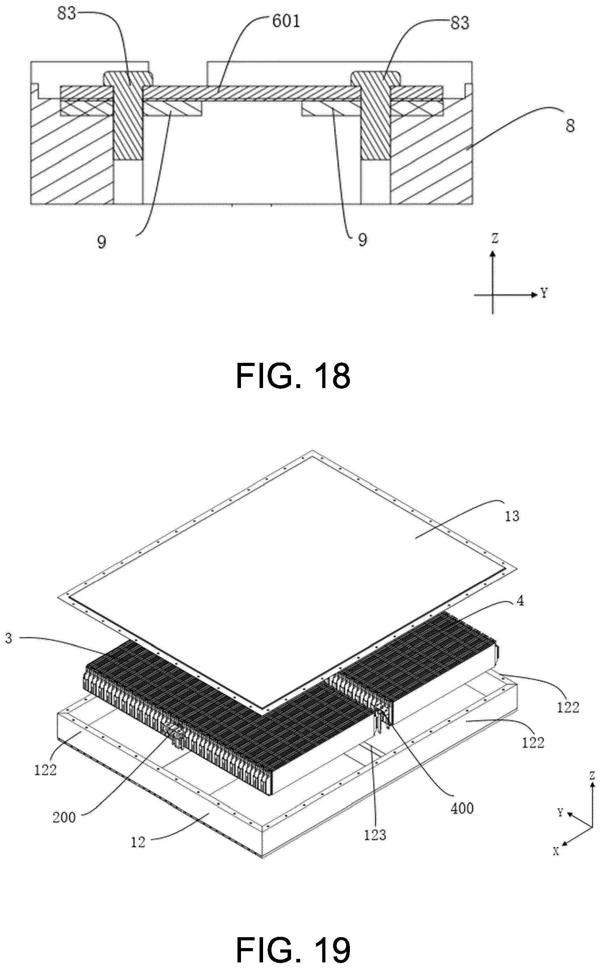

FIG. 17 is a schematic view of an electrode fixing component 300 in this embodiment, showing the electrical connection structure between two sets of battery cell stacks 3 and 4. FIG. 18 is a cross-sectional view along line B-B of the structure shown in FIG. 17.

Referring to FIG. 17 and FIG. 18, the electrode fixing component 300 includes: a bus bar bracket 8, bus bars 9 and a transition bus bar 601. The bus bar bracket 8 may be fixed on the casing middle beam 123 of the casing 1, and includes a pre-embedded nut therein. There are two bus bars 9, one of which is connected to the first battery cell stack 3, and the other is connected to the second battery cell stack 4. The transition bus bar 601 is overlapped with both of the two bus bars 9.

In this embodiment, when the first battery cell stack 3 and the second battery cell stack 4 are configured in the casing 1, the two bus bars 9 respectively connected to the two sets of battery cell stacks 3 and 4 are first fixed on the bus bar bracket 8 in a form corresponding to the nuts. Then the transition bus bar 601 is configured, and after the bolt 83 passes through the transition bus bar 601, the bus bars 9 and the nut in sequence, and the bolt 83 is fastened. In this way, it is possible to achieve high-voltage electrical connection between the two sets of battery cell stacks 3 and 4.

The electrical connection structure in this embodiment makes it possible to realize high-voltage connection between different battery cell stacks in the pouch CTP Pack, and the distance of wiring is short, which helps to improve the stability of the electrical connection and reduce electrical risks. After the battery cell stack is configured into the casing 1, it is only necessary to connect and lock the bus bars 9 to complete the configuration, thus simplifying the configuration process. Moreover, the electrical connection structure is simple and small in size, and there are basically no redundant structural members, so it is possible to reduce the space occupied by the structural members in the casing 1, thereby reducing the volume occupied by the electrical connection structure in the casing 1. In addition, since a transition bus bar 601 is provided, and the transition bus bar 601 is connected to the two bus bars 9, so that the requirements for part accuracy may be reduced to a certain extent, which helps to improve manufacturing and configuration efficiency, and reduce manufacturing and configuration costs.

Although the electrode fixing component 300 in this embodiment is exemplified above for fixing the first output positive electrode 301 and the second output negative electrode 402 as shown in FIG. 1, or fixing the first output negative electrode 302 and the second output positive electrode 401 as shown in FIG. 1, the present disclosure is not limited thereto, as long as the output electrode can be fixed using the electrode fixing component 300 as described above, and there is no specific limitation to the specific position of the output electrode in the casing 1.

### Fourth Embodiment

The electrode fixing component 400 in this embodiment may be used to fix the first output positive electrode 301 and the second output negative electrode 402 as shown in FIG. 1, and may be used to fix the first output negative electrode 302 and the second output positive electrode 401 as shown in FIG. 1.

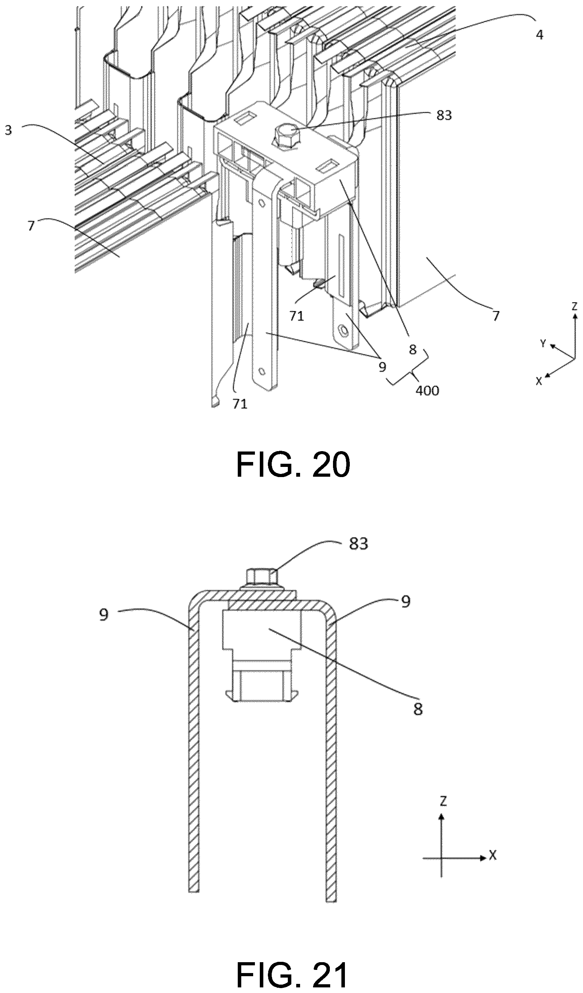

FIG. 19 is an exploded view of a pouch CTP battery pack using the stack distribution method corresponding to FIG. 1. FIG. 20 is a partial enlarged view of FIG. 19, showing a schematic view of the structure of the electrode fixing component 400 in this embodiment. FIG. 21 is a schematic view of the electrode fixing component 400 in this embodiment, showing the electrical connection structure between two sets of battery cell stacks 3 and 4.

Referring to FIG. 19 to FIG. 21, the electrode fixing component 400 includes a bus bar bracket 8 and bus bars 9. The bus bar bracket 8 may be fixed on the casing middle beam 123 of the casing 1, and includes a pre-embedded nut therein. There are two bus bars 9, one of which is connected to the battery cell tab 71 of the first output positive electrode 301, and the other is connected to the battery cell tab 71 of the second output negative electrode 402, or one of which is connected to the battery cell tab 71 of the first output negative electrode 302, and the other is connected to the battery cell tab 71 of the second output positive electrode 401.

In this embodiment, during the process of configuring the two sets of battery cell stacks 3 and 4 into the casing 1, the bus bars 9 connected to the battery cell stack that enters the casing 1 first are overlapped on the bus bar bracket 8, and the bus bars 9 that are connected to the battery cell stack and is configured into the casing later is overlapped on the bus bars 9 that are connected to the battery cell stack and enters the casing first. In this way, the position of one of the bus bars 9 on the bus bar bracket 8 will be higher than the position of the other of the bus bars 9 on the bus bar bracket 8 in the Z-axis direction. More specifically, the position of the bus bars 9 that are connected to the battery cell stack and enters the casing 1 later on the bus bar bracket 8 is higher than the position of the bus bars 9 that are connected to the battery cell stack and enters the casing first on the bus bar bracket 8. After the two bus bars 9 connected to the two sets of battery cell stacks 3 and 4 are overlapped on the bus bar bracket 8 at the upper position and the lower position respectively, the bolt 83 sequentially passes through the bus bars 9 and the nut that are directly overlapped, and the bolt 83 is adopted for locking them tight. In this way, it is possible to achieve the high-voltage electrical connection between the two sets of battery cell stacks 3 and 4. The electrical connection structure in this embodiment eliminates the transition bus bar 601 in the Third Embodiment, so the requirement for configuration space is lower and the insulation risk is lower.

Although the electrode fixing component 400 in this embodiment is exemplified above for fixing the first output positive electrode 301 and the second output negative electrode 402 as shown in FIG. 1, and fixing the first output negative electrode 302 and the second output positive electrode 401 as shown in FIG. 1, the present disclosure is not limited thereto, as long as the electrode fixing component 400 as described above can be used to fix the output electrode, and there is no specific limitation to the specific position of the output electrode in the casing 1.

### Fifth Embodiment

The electrode fixing component 500 in this embodiment may be used to fix the first output positive electrode 301 and the first output negative electrode 302 as shown in FIG. 2, and/or to fix the second output positive electrode 401 and the second output negative electrode 402 as shown in FIG. 2.

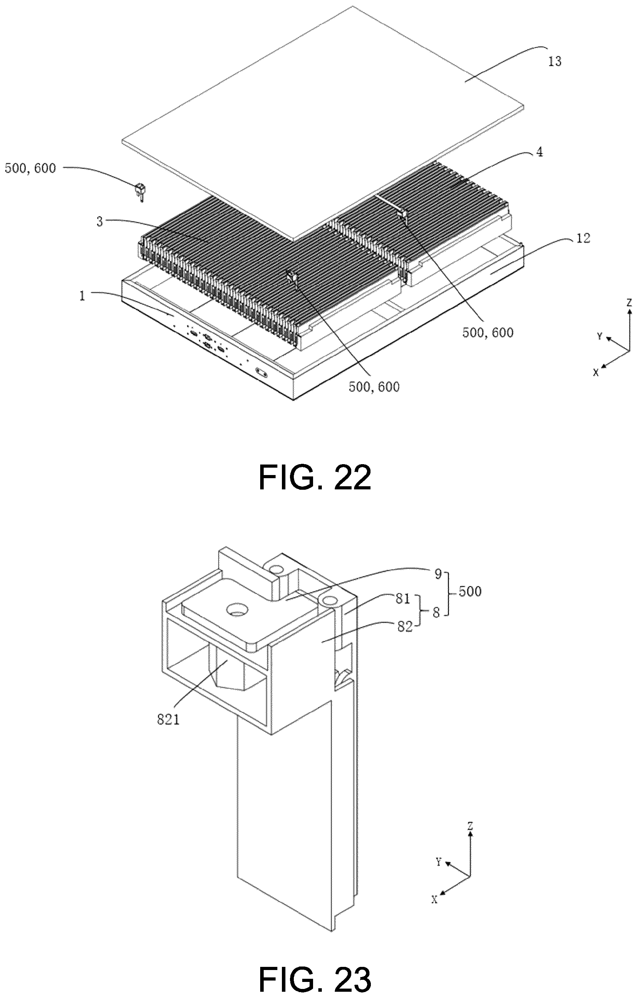

FIG. 22 is an exploded view of a pouch CTP battery pack using the stacking distribution method corresponding to FIG.2. In the pouch CTP structure, most of the internal space of the casing 1 is configured to place the battery cell stack, so the configuration and accommodation space left for the remaining mounting members is limited. By using a highly integrated and small-sized electrode fixing component, redundant mounting members are eliminated, thereby effectively reducing the configuration space required for the output electrode and the difficulty of configuring the output electrode, and maximizing the use of the volume and space in the casing 1.

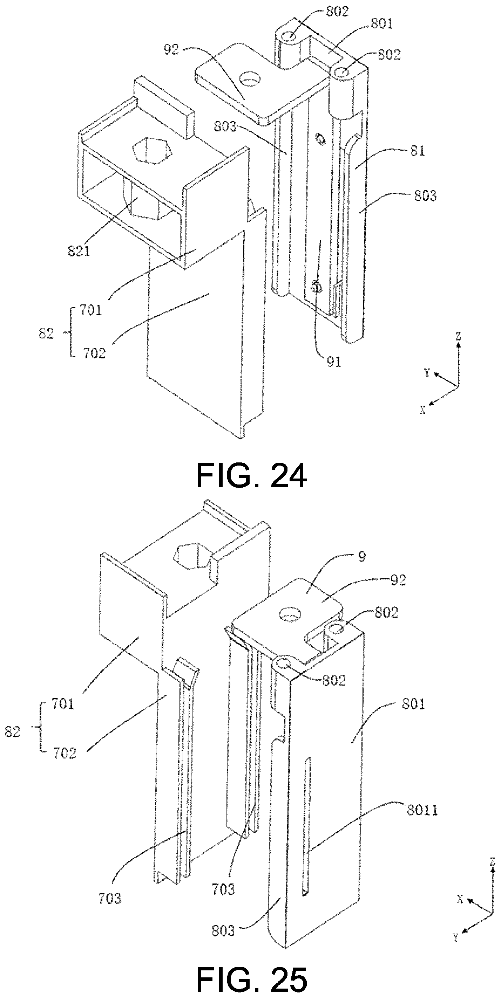

FIG. 23 is a schematic structural view of the electrode fixing component 500 in the embodiment of the present disclosure. FIG. 24 and FIG. 25 are exploded views of the structure shown in FIG. 23.

Referring to FIG. 23 to FIG. 25, the electrode fixing component 500 includes a bus bar bracket 8 and bus bars 9. The bus bar bracket 8 includes a first bus bar support portion 81 and a second bus bar support portion 82, and the second bus bar support portion 82 includes a pre-embedded nut 821 therein.

The first bus bar support portion includes a mounting plate 801, a pair of positioning holes 802 and a pair of guide bars 803. The pair of guide bars 803 are formed by folding two sides of the mounting plate 801 in the same direction in the X-axis direction. The guide bar 803 has a length in the Z-axis direction and a width in the X-axis direction. A pair of protrusion structures are configured above the guide bar 803, and a pair of positioning holes 802 are opened on the upper surface of the pair of protrusion structures. The bus bars 9 are connected to the mounting plate 801 of the first bus bar support portion 81 by hot riveting, snap-fitting, integral injection molding, etc. A through hole 8011 is opened on the mounting plate 801, and the through hole 8011 is configured for the battery cell tab of the output electrode to pass through and be welded to the bus bars 9.

The second bus bar support portion 82 includes a head portion 701 and a body portion 702. One end of the body portion 702 is connected to the head portion 701, and the other end thereof extends downward along the Z-axis direction. A pre-embedded nut 821 is embedded in the head portion 701. The upper surface of the head portion 701 matches and is overlapped with the folded portion 92 of the bus bars 9. Slots 703 are configured on two sides of the body portion 702. The slot width of the slot 703 matches the thickness of the guide bar 803, so that the slot 703 may be inserted by and match the guide bar 803, thereby deposing a part of the battery cell tab of the bus bars 9 on the first bus bar support portion 81 and the second bus bar support portion 82 in an insulating manner. The slot width at the upper port of the slot 703 is slightly larger than the slot width of the main body of the slot 703.

During configuration, by inserting the tool into the positioning hole 802 for positioning, it is possible to prevent the bus bars 9 and the first bus bar support portion 81 from shaking during configuration, thereby improving the configuration accuracy. The cooperation between the guide bar 803 and the slot 703 makes the assembly process between the first bus bar support portion 81 and the second bus bar support portion 82 more convenient and smooth. After the first bus bar support portion 81 and the second bus bar support portion 82 are assembled together, the bus bars 9 may be better positioned between the first bus bar support portion 81 and the second bus bar support portion 82.

The arrangement of the guide bar 803 and the positioning hole 802 makes the battery cell stack more accurately positioned during configuration, and the configuration process is more convenient, thereby reducing the difficulty and cost of configuration. In addition, the guide bar 803 can not only limit the first bus bar support portion 81 and the second bus bar support portion 82, but also insulate and protect the bus bars 9, thus preventing the bus bars 9 from contacting the side beam 122 of the casing 1.

In the embodiment, the second bus bar support portion 82 may be pre-configured on the casing 1 (structure on the casing middle beam 123 and/or the side beam 122). When the battery cell stack is put into the casing, the first bus bar support portion 81 connected to the battery cell stack may be configured in coordination with the second bus bar support portion 82.

Although the electrode fixing component 500 in this embodiment is exemplified above for fixing the first output positive electrode 301 and the first output negative electrode 302 as shown in FIG. 2, or fixing the second output positive electrode 401 and the second output negative electrode 402 as shown in FIG. 2, the present disclosure is not limited thereto, as long as the output electrode can be fixed using the electrode fixing component 500 as described above, and there is no specific limitation to the specific position of the output electrode in the casing 1.

### Sixth Embodiment

The electrode fixing component 600 in this embodiment may be used to fix the first output positive electrode 301 and the first output negative electrode 302 as shown in FIG. 2, or to fix the second output positive electrode 401 and the second output negative electrode 402 as shown in FIG. 2.

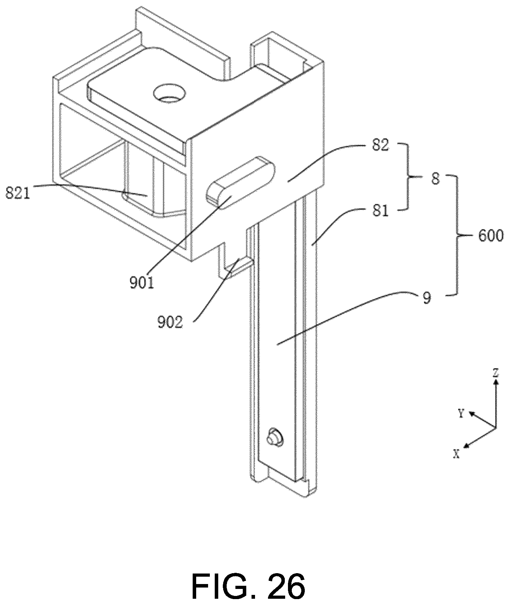

FIG. 26 is a schematic view showing the structure of the electrode fixing component 600 in the present embodiment. Referring to FIG. 26, the electrode fixing component 600 includes: a bus bar bracket 8 and bus bars 9. The bus bar bracket 8 includes a first bus bar support portion 81 and a second bus bar support portion 82, and the second bus bar support portion 82 includes a pre-embedded nut 821 configured therein. The first bus bar support portion 81 and the second bus bar support portion 82 are integrated components and are injection molded.

The bus bars 9 are connected to the first bus bar support portion 81 by means of hot riveting, buckle, integral injection molding, etc. A positioning block 901 and a buckle 902 are configured on the side portion of the bus bar bracket 8.

Since the first bus bar support portion 81 is integrated with the second bus bar support portion 82, during the manufacturing process, there is no need to perform the step of aligning the bus bars 9 with the pre-embedded nuts 821 in the second bus bar support portion 82, thereby simplifying the manufacturing process and enhancing manufacturability.

In this embodiment, the electrode fixing component 600 is pre-configured during configuration, and after the battery cell tab is welded to the bus bars 9, the battery cell stack is configured into the casing. During configuration, the position of the bus bar bracket 8 is controlled by clamping the positioning block 901 on the tooling. After the configuration is completed, the bus bar bracket 8 may be smoothly fixed with the casing 1 (the structure on the casing middle beam 123 and/or the side beam 122) using the buckle 902. In other words, the configuration between the electrode fixing component 600 and the casing 1 may be achieved when the battery cell stack is put into the casing.

Although the electrode fixing component 600 in this embodiment is exemplified above for fixing the first output positive electrode 301 and the first output negative electrode 302 as shown in FIG. 2, or fixing the second output positive electrode 401 and the second output negative electrode 402 as shown in FIG. 2, the present disclosure is not limited thereto, as long as the output electrode can be fixed using the electrode fixing component 600 as described above, and there is no specific limitation on the specific position of the output electrode in the casing 1.

In the arrangement as shown in FIG. 2, the bus bars 9 on the electrode fixing component 500 or the bus bars 9 on the electrode fixing component 600 is electrically connected to the bus bars 9 on the electrode fixing component 100 or the bus bars 9 on the electrode fixing component 200 through the adapter bus bar 6, and the adapter bus bar 6 is supported and fixed on the bus bar bracket 8 of the above-mentioned electrode fixing component.

It should also be noted that the above description provides a variety of implementation methods of the electrode fixing component, wherein the bus bar bracket of the electrode fixing component may be split or integrated. The split bus bar bracket may be configured corresponding to the side beam of the casing, and may also be configured corresponding to the middle beam of the casing. The integrated bus bar bracket may also be configured corresponding to the side beam of the casing, and may also be configured corresponding to the middle beam of the casing. In other words, the different styles of the bus bar bracket (split or integrated) have no correlation with the configuration position (either side beam or middle beam) adapted thereto in the casing. In addition, the electrode fixing components 100 to 600 may all serve as a adapter fixing component between two battery cell stacks or as an output electrode fixing component for the entire battery pack.

## Claims

1. A battery pack, comprising:
a casing (1), comprising a base plate (121);
a battery cell stack (3, 4), located in the casing (1) and formed by stacking a plurality of pouch battery cells (7), wherein the battery cell stack (3, 4) is provided with at least one electrode lead-out portion (71) at an end portion of the pouch battery cells (7) in a length direction;
a thermally conductive structural adhesive, directly bonded between the battery cell stack (3, 4) and the base plate (121);
an electrode fixing component (100, 200, 300, 400, 500, 600), located at an end portion of the battery cell stack (3, 4) where the at least one electrode lead-out portion (71) is formed, and comprising at least one bus bar (9) and a bus bar bracket (8) that supports the at least one bus bar (9), wherein the bus bar bracket (8) is connected to the casing (1), and the at least one electrode lead-out portion (71) is fixed on the at least one bus bar (9).

2. The battery pack according to claim 1, wherein
the casing (1) comprises a beam (122, 123) fixed on the base plate (121),
the bus bar bracket (8) comprises at least one nut member (821) pre-embedded therein,
the bus bar bracket (8) is directly fixed on the beam (122, 123) or fixed on the beam (122, 123) through a connecting structure,
the at least one bus bar (9) is connected with the bus bar bracket (8) in a form of corresponding to the at least one nut member (821).

3. The battery pack according to claim 2, wherein
the at least one bus bar (9) comprises a plate-shaped body (91) and an output connecting portion (92), the output connecting portion (92) is formed by bending and extending an end portion of the plate-shaped body (91),
the bus bar bracket (8) comprises a first bus bar support portion (81) and a second bus bar support portion (82), the second bus bar support portion (82) comprises the at least one nut member (821) pre-embedded therein, and is directly fixed on the beam (122, 123) or fixed on the beam (122, 123) through the connecting structure,
the plate-shaped body (91) and the first bus bar support portion (81) are fixedly connected in a face-to-face manner,
the output connecting portion (92) is fixedly connected to the second bus bar support portion (82) in a form of overlapping the at least one nut member (821).

4. The battery pack according to claim 3, wherein
the output connecting portion (92) is provided with a waist hole, and the waist hole has a length extending along a stacking direction of the pouch battery cells (7),
the output connecting portion (92) is fixedly connected to the second bus bar support portion (82) using a bolt (83) that passes through the waist hole and the at least one nut member (821) in sequence, and
the second bus bar support portion (82) has a buckle (84, 2061) that cooperates with the beam (122, 123) or the connecting structure.

5. The battery pack according to claim 3, wherein
the first bus bar support portion (81) has a baffle, the baffle is located between the battery cell stack (3, 4) and the at least one bus bar (9), and the plate-shaped body (91) is attached to a surface of the baffle parallel to a stacking direction of the pouch battery cells (7).

6. The battery pack according to claim 2 or 3, wherein
a foaming adhesive (5) is filled between the battery cell stack (3, 4) and the beam (122, 123), and the foaming adhesive (5) is able to wrap at least part of the at least one electrode lead-out portion (71) and at least part of the at least one bus bar (9).

7. The battery pack according to claim 3, wherein
the number of the at least one bus bar (9) is two,
the first bus bar support portion (81) is provided with a first partition (822, 2051) that separates the plate-shaped bodies of the two of the at least one bus bar (9),
the second bus bar support portion (82) is provided with a second partition (822, 2051) that separates the output connecting portions (92) of the two of the at least one bus bar (9), and
the first bus bar support portion (81) is provided with two through holes (814, 502) through which the at least one electrode lead-out portion (71) passes through, and the two through holes (814, 502) are located on two sides of the first partition (822, 2051).

8. The battery pack according to claim 3, wherein
one of the first bus bar support portion (81) and the second bus bar support portion (82) is provided with a guide bar (803), and the other is provided with a slot (703) that is matched with and to be inserted by the guide bar (803),
the first bus bar support portion (81) is provided with a through hole (814, 502, 8011) for the at least one electrode lead-out portion (71) to pass through.

9. The battery pack according to claim 7, wherein
the battery cell stack (3, 4) is provided with two of the at least one electrode lead-out portion (71) at the one end portion in the length direction of the pouch battery cells (7),
positive and negative polarities of the two of the at least one electrode lead-out portion (71) are opposite and adjacent to each other in a stacking direction of the pouch battery cells (7),
the two of the at least one electrode lead-out portion (71) pass through the two through holes (814, 502, 8011) respectively and are fixed on the two of the at least one bus bar (9) respectively.

10. The battery pack according to claim 8, wherein
the battery cell stack (3, 4) is provided with two of the at least one electrode lead-out portion (71) at the one end portion in the length direction of the pouch battery cells (7),
positive and negative polarities of the two of the at least one electrode lead-out portion (71) are opposite and are placed at two end portions of the battery cell stack (3, 4) in a stacking direction of the pouch battery cells (7),
the number of the electrode fixing components (100, 200, 300, 400, 500, 600) is two, one of the at least one electrode lead-out portion (71) is fixed on the at least one bus bar (9) of one of the electrode fixing components (100, 200, 300, 400, 500, 600), and the other of the at least one electrode lead-out portion (71) is fixed on the at least one bus bar (9) of the other one of the electrode fixing components (100, 200, 300, 400, 500, 600).

11. The battery pack according to claim 2, wherein
the beam (122, 123) comprises a side beam (122) and a middle beam (123), the side beam (122) is configured along an edge of the base plate (121) and encloses to form a configuration space, the middle beam (123) extends along a stacking direction of the pouch battery cells (7) and divides the configuration space into a first configuration space and a second configuration space,
the battery cell stack (3, 4) comprises a first battery cell stack (3) configured in the first configuration space and a second battery cell stack (4) configured in the second configuration space, at least one first electrode lead-out portion (71) is configured at an end portion of the first battery cell stack (3) close to the second battery cell stack (4), and at least one second electrode lead-out portion (71) is configured at an end portion of the second battery cell stack (4) close to the first battery cell stack (3),
the at least one first electrode lead-out portion (71) and the at least one second electrode lead-out portion (71) have opposite positive and negative polarities and are arranged corresponding to each other across the middle beam (123),
the bus bar bracket (8) is directly fixed on the middle beam (123) or fixed on the middle beam (123) through the connecting structure,
the at least one bus bar (9) comprises at least one first bus bar at least partially located in the first configuration space and at least one second bus bar at least partially located in the second configuration space,
the bus bar bracket (8) supports the at least one first bus bar and the at least one second bus bar that are electrically connected to each other,
the at least one first electrode lead-out portion (71) is fixed on the at least one first bus bar, and the at least one second electrode lead-out portion (71) is fixed on the at least one second bus bar.

12. The battery pack according to claim 11, wherein
the at least one first bus bar comprises a plate-shaped body (91) and an output connecting portion (92) formed by bending and extending an end portion of the plate-shaped body (91), and the at least one second bus bar comprises a plate-shaped body (91) and an output connecting portion (92) formed by bending and extending an end portion of the plate-shaped body (91),
the bus bar bracket (8) supports the output connecting portion (92) of the at least one first bus bar and the output connecting portion (92) of the at least one second bus bar spaced apart from each other,
the at least one bus bar (9) further comprises at least one transition bus bar (601) connected between the output connecting portion (92) of the at least one first bus bar and the output connecting portion (92) of the at least one second bus bar,
a bolt (83) passes through the at least one transition bus bar (601) and the output connecting portion (92) of the at least one first bus bar, and is connectively matched with one of the at least one nut member (821) pre-embedded inside the bus bar bracket (8),
another bolt (83) passes through the at least one transition bus bar (601) and the output connecting portion (92) of the at least one second bus bar, and is connectively matched with another of the at least one nut member (821) pre-embedded inside the bus bar bracket (8),
the at least one first electrode lead-out portion (71) is fixed on the plate-shaped body (91) of the at least one first bus bar and the at least one second electrode lead-out portion (71) is fixed on the plate-shaped body (91) of the at least one second bus bar.

13. The battery pack according to claim 11, wherein
the at least one first bus bar comprises a plate-shaped body (91) and an output connecting portion (92) formed by bending and extending an end portion of the plate-shaped body (91), and the at least one second bus bar comprises a plate-shaped body (91) and an output connecting portion (92) formed by bending and extending an end portion of the plate-shaped body (91),
the bus bar bracket (8) supports the output connecting portion (92) of the at least one first bus bar and the output connecting portion (92) of the at least one second bus bar that are stacked on each other in a vertical direction,
a bolt (83) passes through the output connecting portion (92) of the at least one first bus bar and the output connecting portion (92) of the at least one second bus bar, and is connectively matched with the at least one nut member (821) pre-embedded inside the bus bar bracket (8),
the at least one first electrode lead-out portion (71) is fixed on the plate-shaped body (91) of the at least one first bus bar, and the at least one second electrode lead-out portion (71) is fixed on the plate-shaped body (91) of the at least one second bus bar.

14. The battery pack according to claim 2, wherein
the beam (122, 123) comprises a side beam (122) and a middle beam (123), the side beam (122) is configured along an edge of the base plate (121) and encloses to form a configuration space, the middle beam (123) extends along a stacking direction of the pouch battery cells (7) and divides the configuration space into a first configuration space and a second configuration space,
the battery cell stack (3, 4) comprise a first battery cell stack (3) configured in the first configuration space and a second battery cell stack (4) configured in the second configuration space,
a first positive electrode lead-out portion (301) and a first negative electrode lead-out portion (302) are configured at an end portion of the first battery cell stack (3) close to the second battery cell stack (4), and the first positive electrode lead-out portion (301) and the first negative electrode lead-out portion (302) are placed at two end portions of the battery cell stack (3, 4) in the stacking direction of the pouch battery cells (7),
a second positive electrode lead-out portion (401) and a second negative electrode lead-out portion (402) are configured at an end portion of the second battery cell stack (4) close to the first battery cell stack (3), and the second positive electrode lead-out portion (401) and the second negative electrode lead-out portion (402) are placed at the two end portions of the battery cell stack (3, 4) in the stacking direction of the pouch battery cells (7), and a position of the first positive electrode lead-out portion (301) corresponds to a position of the second negative electrode lead-out portion (402), a position of the first negative electrode lead-out portion (302) corresponds to a position of the second positive electrode lead-out portion (401),
a third positive electrode lead-out portion (303) and a third negative electrode lead-out portion (304) are configured at an end portion of the first battery cell stack (3) away from the second battery cell stack (4), the third positive electrode lead-out portion (303) and the third negative electrode lead-out portion (304) are adjacent to each other in the stacking direction of the pouch battery cells (7),
the electrode fixing component (100, 200, 300, 400, 500, 600) comprises a first electrode fixing component (300, 400), a second electrode fixing component (300, 400) and a third electrode fixing component (100, 200),
the bus bar bracket (8) of the first electrode fixing component (300, 400) is directly fixed on the middle beam (123) or fixed on the middle beam (123) through the connecting structure, the first positive electrode lead-out portion (301) and the second negative electrode lead-out portion (402) are respectively fixed on two of the at least one bus bar (9) of the first electrode fixing component (300, 400) electrically connected to each other,
the bus bar bracket (8) of the second electrode fixing component (300, 400) is directly fixed on the middle beam (123) or fixed on the middle beam (123) through the connecting structure, the first negative electrode lead-out portion (302) and the second positive electrode lead-out portion (401) are respectively fixed on two of the at least one bus bar (9) of the second electrode fixing component (300, 400) electrically connected to each other,
the bus bar bracket (8) of the third electrode fixing component (100, 200) is directly fixed on the side beam (122) or fixed on the side beam (122) through the connecting structure, and the third positive electrode lead-out portion (303) and the third negative electrode lead-out portion (304) are respectively fixed on two of the separate at least one bus bar (9) of the third electrode fixing component (100, 200).

15. The battery pack according to claim 2, wherein
the beam (122, 123) comprises a side beam (122) and a middle beam (123), the side beam (122) is configured along an edge of the base plate (121) and encloses to form a configuration space, the middle beam (123) extends along a stacking direction of the pouch battery cells (7) and divides the configuration space into a first configuration space and a second configuration space,
the battery cell stack (3, 4) comprises a first battery cell stack (3) configured in the first configuration space and a second battery cell stack (4) configured in the second configuration space,
a first positive electrode lead-out portion (301) and a first negative electrode lead-out portion (302) are configured at an end portion of the first battery cell stack (3) away from the second battery cell stack (4), and the first positive electrode lead-out portion (301) and the first negative electrode lead-out portion (302) are placed at two end portions of the battery cell stack (3, 4) in the stacking direction of the pouch battery cells (7),
a second positive electrode lead-out portion (401) and a second negative electrode lead-out portion (402) are configured at an end portion of the second battery cell stack (4) near the first battery cell stack (3), and the second positive electrode lead-out portion (401) and the second negative electrode lead-out portion (402) are placed at the two end portions of the battery cell stack (3, 4) in the stacking direction of the pouch battery cells (7),
a third positive electrode lead-out portion (303) and a third negative electrode lead-out portion (304) are configured at an end portion of the first battery cell stack (3) near the second battery cell stack (4), and the third positive electrode lead-out portion (303) and the third negative electrode lead-out portion (304) are adjacent to each other in the stacking direction of the pouch battery cells (7),
the electrode fixing component (100, 200, 300, 400, 500, 600) comprises a first electrode fixing component (500, 600), a second electrode fixing component (500, 600), a third electrode fixing component (500, 600), a fourth electrode fixing component (500, 600) and a fifth electrode fixing component (100, 200),
the bus bar bracket (8) of the first electrode fixing component (500, 600) is directly fixed on the side beam (122) or fixed on the side beam (122) through the connecting structure, and the first positive electrode lead-out portion (301) is fixed on the at least one bus bar (9) of the first electrode fixing component (500, 600),
the bus bar bracket (8) of the second electrode fixing component (500, 600) is directly fixed on the side beam (122) or fixed on the side beam (122) through the connecting structure, and the first negative electrode lead-out portion (302) is fixed on the at least one bus bar (9) of the second electrode fixing component (500, 600),
the bus bar bracket (8) of the third electrode fixing component (500, 600) is directly fixed on the middle beam (123) or fixed on the middle beam (123) through the connecting structure, and the second positive electrode lead-out portion (401) is fixed on the at least one bus bar (9) of the third electrode fixing component (500, 600),
the bus bar bracket (8) of the fourth electrode fixing component (500, 600) is directly fixed on the middle beam (123) or fixed on the middle beam (123) through the connecting structure, and the second negative electrode lead-out portion (402) is fixed on the at least one bus bar (9) of the fourth electrode fixing component (500, 600),
the bus bar bracket (8) of the fifth electrode fixing component (100, 200) is directly fixed on the middle beam (123) or fixed on the middle beam (123) through the connecting structure, the third positive electrode lead-out portion (303) and the third negative electrode lead-out portion (304) are respectively fixed on two of the separate at least one bus bar (9) of the fifth electrode fixing component (100, 200).
